# EUROPÄISCHE PATENTANMELDUNG

(11) **EP 3 424 760 A1**
(43) Veröffentlichungstag der Anmeldung: **09.01.2019**
(21) Anmeldenummer: 18163877.6
(22) Anmeldetag: 26.03.2018
(51) Int. Cl.: B60H 1/00

(54) **KABINE FÜR EIN LANDWIRTSCHAFTLICHES ARBEITSFAHRZEUG**

(30) Priorität: 06.07.2017 DE 102017115124
(71) Anmelder: CLAAS Selbstfahrende Erntemaschinen GmbH, 33428 Harsewinkel (DE)
(72) Erfinder: Behnke, Alexander, 33378 Rheda- Wiedenbrück (DE); Deppe, Markus, 33790 Halle/Westf. (DE); Dannigkeit, Florian, 33428 Harsewinkel (DE)
(74) Vertreter: CLAAS Gruppe

(57) **Zusammenfassung**

Die vorliegende Erfindung betrifft eine Kabine (13) für ein landwirtschaftliches Arbeitsfahrzeug (1), umfassend einen Kabinenboden (14) und ein Kabinendach (23), zwischen denen, von einer Rahmenstruktur aufgenommen, eine Frontscheibe (24) und Seitenscheiben (28, 29) angeordnet sind, einen auf dem Kabinenboden (14) angeordneten Fahrersitz (10), zumindest eine Luftbehandlungsvorrichtung (33) zum Kühlen und Erwärmen eines Zuluftstromes (ZL), der mittels wenigstens eines Gebläses (34a, 34b, 76) durch einen im Bereich des Kabinendaches (23) angeordneten Ansaugkanal (46) der Kabine (13) zuführbar ist, sowie zumindest einen ersten Luftverteilkanal (37) im Bereich des Kabinendaches (23) mit wenigstens einer in den Innenraum der Kabine (13) mündenden ersten Luftaustrittsöffnung (38), wobei zumindest ein zweiter Luftverteilkanal (39) im Bereich des Kabinendaches (23) mit wenigstens einer in den Innenraum der Kabine (13) mündenden zweiten Luftaustrittsöffnung (40) vorgesehen ist, wobei die wenigstens eine erste Luftaustrittsöffnung (38) im Bereich der Frontscheibe (24) positioniert ist und einen ersten Luftstrom (47) im Wesentlichen entlang der Frontscheibe (24) nach unten gerichtet abgibt, und dass die wenigstens eine zweite in den Innenraum der Kabine mündende Luftaustrittsöffnung (40) einen zweiten Luftstrom (48) in Richtung des Fahrersitzes (10) gerichtet abgibt, wobei der erste Luftstrom (47) eine höhere Temperatur als der zweite Luftstrom (48) aufweist.

## Beschreibung

Die vorliegende Erfindung betrifft eine Kabine für ein landwirtschaftliches Arbeitsfahrzeug gemäß dem Oberbegriff des Anspruches 1 sowie ein landwirtschaftliches Fahrzeug.

Kabinen für landwirtschaftliches Arbeitsfahrzeug, wie sie in der Land-, Forst oder Bauwirtschaft zum Einsatz kommen, stellen einen vollwertigen Arbeitsplatz dar, der von einer Bedienperson oftmals während eines gesamten Arbeitstages genutzt wird. Beispielhaft sind hier Traktoren, selbstfahrende Erntemaschinen wie Mähdrescher oder Feldhäcksler, Holzvollernter oder Radlader zu nennen. Da solche Arbeitsfahrzeuge unter verschiedensten klimatischen Umgebungsbedingen zum Einsatz kommen, sind die Kabinen mit einer Luftbehandlungsvorrichtung ausgestattet, die zum Kühlen und Erwärmen eines der Kabine zugeführten Frischluftstromes dient.

Eine Kabine für ein Arbeitsfahrzeug gemäß dem Oberbegriff des Anspruches 1 ist aus der EP 2 080 649 B1 bekannt. Die Kabine umfasst einen Boden und ein Kabinendach, zwischen denen, von einer Rahmenstruktur aufgenommen, eine Frontscheibe und Seitenscheiben angeordnet sind, die eine Rundumsicht der Bedienperson ermöglichen. Auf dem Boden der Kabine ist ein Fahrersitz angeordnet. In dem Kabinendach der Kabine ist eine Luftbehandlungsvorrichtung zum Kühlen und Erwärmen eines Frischluftstromes angeordnet, der mittels wenigstens eines Gebläses durch einen im Kabinendach angeordneten Ansaugkanal von außerhalb der Kabine zuführbar ist. Durch zumindest einen ersten Luftverteilkanal im Kabinendach wird in den Innenraum der Kabine mündenden ersten Luftaustrittsöffnungen ein von der Luftbehandlungsvorrichtung behandelter Luftstrom zugeführt. Dabei ist in der Kabine gemäß der EP 2 080 649 B1 vorgesehen, dass im Kabinendach-, Boden- und Seitenbereich der Kabine eine Mehrzahl von Luftführungskanälen für die einzublasende Luft ausgebildet sind, denen die von in den Innenraum der Fahrzeugkabine gerichteten Luftaustrittsöffnungen zugeordnet sind. Jeder der Luftzuführungskanäle ist mit einem Gebläse versehen, um in den unterschiedlichen Bereichen der Kabine, unter anderem im Fußbereich und Kopfbereich einer Bedienperson, durch eine geeignete Ansteuerung der Gebläse eine gleichmäßige Temperatur aufrechtzuerhalten. Insbesondere die in der Rahmenstruktur, den so genannten A-Säulen und B-Säulen vorgesehenen Luftführungskanäle weisen den Nachteil auf, dass aufgrund des geringen Querschnitts der Rahmenstruktur die Strömungswiderstände relativ hoch sind.

Vor diesem Hintergrund stellt sich der vorliegenden Erfindung die Aufgabe, eine Kabine der eingangs genannten Art weiterzubilden, um eine Verbesserung des Komfortempfindens zu erreichen.

Diese Aufgabe wird erfindungsgemäß durch eine Kabine für ein landwirtschaftliches Arbeitsfahrzeug gemäß den Merkmalen des Anspruches 1 gelöst.

Vorteilhafte Weiterbildungen sind Gegenstand der Unteransprüche.

Gemäß dem Anspruch 1 wird eine Kabine für ein landwirtschaftliches Arbeitsfahrzeug vorgeschlagen, die einen Boden und ein Kabinendach, zwischen denen, von einer Rahmenstruktur aufgenommen, eine Frontscheibe und Seitenscheiben angeordnet sind, sowie einen auf dem Boden angeordneten Fahrersitz umfasst. Weiterhin umfasst die Kabine zumindest eine Luftbehandlungsvorrichtung zum Kühlen und Erwärmen eines Zuluftstromes, welcher mittels wenigstens eines Gebläses durch einen im Bereich des Kabinendaches angeordneten Ansaugkanal der Kabine zuführbar ist, sowie zumindest einen ersten Luftverteilkanal im Bereich des Kabinendaches mit wenigstens einer in den Innenraum der Kabine mündenden ersten Luftaustrittsöffnung. Der Zuluftstrom setzt sich aus von außen zugeführter Frischluft und in der Kabine zirkulierender Umluft mit veränderlichen Volumenstromanteilen zusammen, wobei ein Volumenstromanteil auch gegen Null tendieren kann. Zur Komfortsteigerung ist vorgesehen, dass zumindest ein zweiter Luftverteilkanal im Bereich des Kabinendaches mit wenigstens einer in den Innenraum der Kabine mündenden zweiten Luftaustrittsöffnung vorgesehen ist, wobei die wenigstens eine erste Luftaustrittsöffnung im Bereich der Frontscheibe positioniert ist und einen ersten Luftstrom im Wesentlichen entlang der Frontscheibe nach unten gerichtet abgibt, und dass die wenigstens eine zweite in den Innenraum der Kabine mündende Luftaustrittsöffnung einen zweiten Luftstrom in Richtung des Fahrersitzes gerichtet abgibt, wobei der erste Luftstrom eine höhere Temperatur als der zweite Luftstrom aufweist. Eine in dieser Weise ausgeführte Kabine weist gegen über der aus dem Stand der Technik bekannten Kabine den Vorteil auf, dass eine Temperaturschichtung im Inneren der Kabine erreichbar ist. Während der wärmere erste Luftstrom im Wesentlichen entlang der Frontscheibe in den Fußbereich einer Bedienperson strömt, wird im Kopfbereich der Bedienperson der kältere zweite Luftstrom zugeführt. Dies trägt zu einem besseren Raumklima bei, da diese Temperaturschichtung bei der Bedienperson zu einem gleichmäßigeren Temperaturempfinden im Kopf- und Fußbereich führt. Ein weiterer Vorteil ergibt sich daraus, dass, da der erste Luftstrom im Wesentlichen entlang der Frontscheibe nach unten geführt wird, auf in der Rahmenstruktur der Kabine angeordnete Luftaustrittsöffnungen verzichtet werden kann, ebenso wie auf in der Rahmenstruktur befindliche Luftverteilkanäle. Die Anordnung der wenigstens einen ersten und zweiten Luftaustrittsöffnungen erfolgt im Bereich des Kabinendaches. Dabei kann die Anordnung des zumindest einen ersten und zweiten Luftverteilkanals im Kabinendach erfolgen. Die Anordnung kann auch im Dachhimmel erfolgen oder zwischen Kabinendach und Dachhimmel. Denkbar ist auch eine Ausführung des zumindest einen ersten und zweiten Luftverteilkanals als jeweils separates Bauteil. Dies hat weiterhin den Vorteil, dass insbesondere die A-Säulen bzw. B-Säulen der Kabine schmal dimensioniert werden können, um eine gute Sicht gewährleisten zu können. Ebenfalls wird durch den Verzicht von Luftaustrittsöffnungen in den A- bzw. B-Säulen eine Vereinfachung bei der Herstellung der Säulen erreicht.

Eine vorteilhafte Weiterbildung sieht vor, dass die Luftbehandlungsvorrichtung eine separate Kühlvorrichtung und Heizvorrichtung aufweist, wobei der Zuluftstrom, insbesondere ein Gemisch aus Frischluft und Umluft mit unterschiedlichen Volumenstromanteilen, zunächst der Kühlvorrichtung zugeführt wird, welche den behandelten Luftstrom an die nachgeordnete Heizvorrichtung abgibt. Dabei kann vorgesehen sein, das Durchströmen der Heizungsvorrichtung durch zumindest eine Verschlussklappe zu verhindern. So kann mittels der zumindest einen Verschlussklappe der Luftstrom an der Heizungsvorrichtung vorbeigeführt werden. Durch eine solche Maßnahme lässt sich eine kleinere Dimensionierung der Kühlvorrichtung erreichen, da die permanente Erwärmung des aus der Kühlvorrichtung austretenden Luftstroms zumindest reduziert wird. Dies ist von Vorteil, wenn das Arbeitsfahrzeug bei hohen Außentemperaturen betrieben wird. Vorteilhaft ist in diesem Zusammenhang das Verbauen von wärmeisolierenden Verschlussklappen.

Hierbei ist vorgesehen, dass in den zumindest einen ersten Luftverteilkanal von der Heizvorrichtung behandelte Luft einleitbar ist, während von der Kühlvorrichtung behandelte Luft anteilig in den zumindest einen zweiten Luftverteilkanal abzweigbar bzw. zumischbar ist.

Insbesondere kann in dem zumindest einen ersten Luftverteilkanal ein Bypass angeordnet sein, durch welchen dem zumindest einen zweiten Luftverteilkanal der erste Luftstrom aus dem ersten Luftverteilkanal anteilig zuführbar ist. Hierdurch lässt sich ein Durchmischen des wärmeren ersten Luftstroms mit dem kühleren zweiten Luftstrom erreichen, bevor dieser durch die wenigstens eine zweite Luftaustrittsöffnung das Innere der Kabine geleitet wird.

Hierzu kann der durch den Bypass dem zumindest einen zweiten Luftverteilkanal zugeführte Volumenstrom des ersten Luftstroms durch zumindest ein Strömungsbegrenzungselement begrenzbar sein. Im einfachsten Fall ist als Strömungsbegrenzungselement eine Drosselscheibe oder Blende vorgesehen.

Eine bevorzugte Weiterbildung sieht vor, dass das Strömungsbegrenzungselement temperatur- und/oder volumenstromabhängig einstellbar ist. Hierzu kann der Querschnitt der zumindest einen Durchtrittsöffnung des Strömungsbegrenzungselements sich in Strömungsrichtung verjüngen. Auf diese Weise lässt sich eine Temperatursteuerung darstellen, um die Temperatur des aus der wenigstens einen zweiten Luftaustrittsöffnung austretenden zweiten Luftstroms zu variieren.

Des Weiteren kann vorgesehen sein, dass der durch den Bypass zugeführte Volumenstrom des ersten Luftstroms durch zumindest eine verstellbare Klappe begrenzbar ist. Die Klappe kann durch eine Aktorik betätigbar sein, beispielsweise einen elektrischen Stellmotor. Die Klappe lässt sich mittels der Aktorik in unterschiedliche Stellungen überführen, so dass der Volumenstromanteil des ersten Luftstroms, der durch den ersten Bypass abgezweigt wird, variierbar ist. Diese Verstellung kann in diskreten Schritten oder stufenlos erfolgen. Gemäß einer Weiterbildung kann die Ansteuerung der Aktorik mit einem Temperatursensor gekoppelt sein, so dass sich eine temperaturabhängige Volumenstromsteuerung ergibt.

Vorteilhaft ist es, wenn die Heizvorrichtung zur Horizontalen geneigt angeordnet ist. Die geneigte Anordnung der Heizvorrichtung trägt zur Einhaltung der Bauhöhe bei. Wegen des nur beschränkt zur Verfügung stehenden Bauraums in dem Kabinendach der Kabine ist der Abstand zwischen der Kühlvorrichtung und der Heizvorrichtung gering. Dadurch ist auch der Bereich der Durchmischung des ersten Luftstroms und des zweiten Luftstroms limitiert. Um die Durchmischung des ersten Luftstroms und des zweiten Luftstroms zu verbessern, ist die Klappe des Bypasses strömungstechnisch optimiert ausgebildet. Dabei wird auf gerade Kantenverläufe an der Klappe im Wesentlichen verzichtet, so dass sich neben einer besseren Durchmischung ein leiserer Betrieb darstellen lässt. Zusätzlich können im Bereich der Durchmischung rippenförmige Elemente angeordnet sein, die die Durchmischung begünstigen.

Insbesondere sollte der benachbart zu der Frontscheibe angeordnete erste Luftverteilkanal sich im Wesentlichen über die Breite der Kabine erstrecken. Besonders bevorzugt sind im Bereich der Frontscheibe wenigstens zwei erste Luftaustrittsöffnungen im Kabinendach angeordnet. Darüber hinaus ist parallel zu den Seitenscheiben jeweils zumindest eine erste Luftaustrittsöffnung im Kabinendach angeordnet. Der aus den ersten Luftaustrittsöffnungen austretende vorhangartige Luftstrom dient dazu beschlagene oder vereiste Scheiben schnellstmöglich freizumachen, um ein sicheres Führen des landwirtschaftlichen Arbeitsfahrzeuges durch eine entsprechend gute Rundumsicht zu gewährleisten.

Bevorzugt können in dem ersten Luftverteilkanal den ersten Luftstrom beeinflussende Mittel vorgesehen sein, die der Vergleichmäßigung des Volumenstromes des durch zumindest zwei erste Luftaustrittsöffnungen ausströmenden ersten Luftstroms dienen. Eine im Allgemeinen einseitige Anordnung des Ansaugkanals im Randbereich des Kabinendaches führt dazu, dass es zu einer ungleichmäßigen Verteilung des zugeführten Zuluftstroms in der Luftbehandlungsvorrichtung kommt. Dies setzt sich fort bis hin zu den ersten Luftaustrittsöffnungen. Insbesondere bei einer Verwendung zweier nebeneinander angeordneter Gebläse bzw. zweier Gebläseläufer führt diese ungleichmäßige Aufteilung zu einer Temperaturdifferenz zwischen den von den Gebläsen an die der Luftbehandlungsvorrichtung abgegebenen Teilzuluftströmen. Durch eine strömungstechnische Beeinflussung des den beiden Gebläsen zugeführten Zuluftstromes wird eine nahezu gleichmäßige Aufteilung erreicht. Durch die den ersten Luftstrom beeinflussenden Mittel wird eine homogenere Luftverteilung in der Kabine erreicht.

Hierzu können die Mittel als Rippen, Prallwände, querschnittsveränderte Kanalabschnitte oder Leitwände ausgeführt sein. Diese Mittel sind vorzugsweise symmetrisch in dem ersten Luftverteilkanal angeordnet.

Weiterhin kann in dem Kabinendach zumindest ein Luftfilter im Ansaugkanal angeordnet sein, der durch eine verschließbare Öffnung an der Außenseite des Kabinendaches entnehmbar ist, so dass in entnommenen Zustand ein hinter dem Luftfilter positionierter Umluftfilter durch die gleiche Öffnung entnehmbar ist. Neben der Zufuhr von Frischluft wird mit dem Zuluftstrom der Kabine Umluft zugeführt, welche zusammen mit der Luftbehandlungsvorrichtung behandelt wurde. Somit kommt neben einem Luftfilter, der der Filtration der zugeführten Frischluft dient, auch ein Umluftfilter zum Einsatz. Dadurch, dass der Umluftfilter durch die gleiche Öffnung des Kabinendaches entnehmbar ist, wie der Luftfilter, wird dieser bei der Entnahme nach außen entleert. Bevorzugt erfolgt ein liegender Einbau, das heißt die Eintrittsöffnung des Umluftfilters ist im Wesentlichen senkrecht zur Entnahmerichtung orientiert. Das hat den Vorteil, dass beim Entnehmen des Umluftfilters in diesem verbliebene Rückstände nicht in das Innere des Kabinendaches gelangen können.

Eine Ausführungsform sieht vor, dass das Innere der Kabine durch eine einseitig betätigbare Entlüftungsklappe mit dem Ansaugkanal strömungstechnisch verbindbar ist. Durch die Entlüftungsklappe lässt sich ein in der Kabine aufbauender Überdruck, der durch das Zuschlagen der Kabinentür hervorgerufen wird, ausgleichen. Die durch den schlagartig aufgebauten Überdruck komprimierte Luft kann als Luftstoß durch die Entlüftungsklappe entweichen und gelangt in den Ansaugkanal. Der im Ansaugkanal angeordnete Luftfilter sowie der Umluftfilter können mittels des Luftstoßes in Schwingungen versetzt werden, so dass an den Filterflächen anhaftende Partikel abgelöst werden. Die Anordnung der Entlüftungsklappe erfolgt dabei im Bereich oberhalb der Kabinentür.

Weiterhin kann das Innere der Kabine durch einen Entlüftungskanal mit der Umgebung strömungstechnisch permanent verbunden sein, wobei der Entlüftungskanal einen Abschnitt mit einem im Wesentlichen U-förmigen Verlauf aufweist. Der Abschnitt des Entlüftungskanals kann nach dem Wirkprinzip eines Siphons arbeiten.

Die Entlüftung der Kabine wird in zwei separate Teilsysteme untergliedert. Das erste Teilsystem umfasst die einseitig betätigbare Entlüftungsklappe, welche mit dem Ansaugkanal strömungstechnisch verbindbar ist. Das zweite Teilsystem umfasst den Entlüftungskanal, der das innere der Kabine permanent mit der Umgebung verbindet.

Weiterhin betrifft die eingangs gestellte Aufgabe durch ein landwirtschaftliches Arbeitsfahrzeug mit einer Kabine nach einem der Ansprüche 1 bis 14 gelöst.

Die vorliegende Erfindung wird nachstehend anhand von in den Zeichnungen dargestellten Ausführungsbeispieles näher erläutert.

Es zeigen:
- Fig. 1: ein als landwirtschaftlicher Traktor ausgebildetes Arbeitsfahrzeug;
- Fig. 2: eine Ansicht eines Kabinendaches eines Arbeitsfahrzeuges von unten;
- Fig. 3: eine Längsschnittansicht entlang der Linie A-A gemäß Fig. 2 des Kabinendaches;
- Fig. 4: eine Teilansicht X gemäß Fig. 2 auf eine Unterschale;
- Fig. 5: eine perspektivische Ansicht eines Ausschnitts B gemäß Fig. 2 des Kabinendaches;
- Fig. 6: eine Teilschnittansicht des Kabinendaches entlang der Linie E-E gemäß Fig. 2 mit einem Aufnahmeabschnitt für einen Luftfilter;
- Fig. 7: eine perspektivische Ansicht eines den Aufnahmeabschnitt verschließenden Abdeckelementes;
- Fig. 8: eine Teilansicht des Kabinendaches von schräg hinten mit einem zu montierenden Filterschlauch;

- Fig. 9: eine Teilansicht des Kabinendaches 23 von schräg hinten mit montiertem Filterschlauch;
- Fig. 10: eine perspektivische Teilansicht D gemäß Fig. 2 des Kabinendaches von schräg hinten mit einem Wandeinsatz;
- Fig. 11: eine perspektivische Teilansicht D gemäß Fig. 2 des Kabinendaches von schräg hinten mit einem Wandeinsatz gemäß einer weiteren Ausführungsform;
- Fig. 12: eine perspektivische Teilansicht des Kabinendaches von schräg unten;
- Fig. 13: eine Teilansicht des Kabinendaches im Längsschnitt entlang der Linie E-E gemäß Fig. 2;
- Fig. 14: eine perspektivische Teilansicht des Kabinendaches von der Seite;
- Fig. 15: eine perspektivische Ansicht der Kabine von schräg unten;
- Fig. 16: eine perspektivische Teilansicht auf die Unterschale von oben.

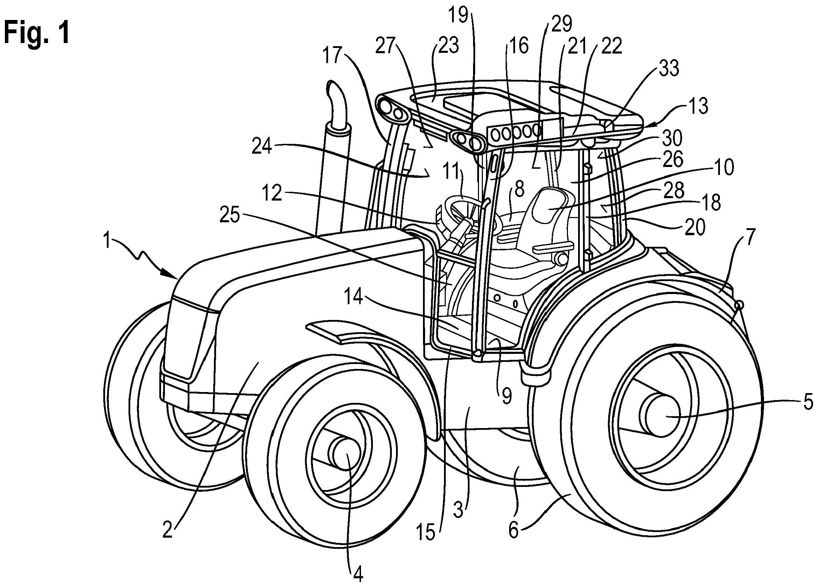

In der Figur 1 ist ein als landwirtschaftlicher Traktor 1 ausgebildetes Arbeitsfahrzeug dargestellt, welches in Blockbauweise ausgebildet ist. Dabei ist ein Motorgehäuse 2 einer Brennkraftmaschine des Traktors 1 mit einem Getriebe- und Hinterachsgehäuse 3 verbunden. In seinem Frontbereich weist der Traktor 1 eine Vorderachse 4 auf, die über ein nicht näher dargestelltes Vorderachsgehäuse am Motorgehäuse 2 befestigt ist. Im Heckbereich des Traktors 1 gehen von dem Getriebe- und Hinterachsgehäuse 3 zwei Radachsen aus, von denen in der Darstellung nach der Figur 1 nur eine Radachse 5 sichtbar ist. Die Radachsen treiben dabei Hinterräder 6 an, die beidseitig des Traktors 1 über einen Teil ihres Außenumfangs von Kotflügeln 7 und 8 abgedeckt sind, wobei die Kotflügel 7 und 8 gemeinsam mit einem Fahrerstand 9 ausgebildet sein können. Auf diesem Fahrerstand 9, der gemeinsam mit den Kotflügeln 7 und 8 ausgebildet ist, sind unter anderem ein Fahrersitz 10, eine Lenkeinrichtung 11 sowie eine Anzeige- und Bedieneinheit 12 angeordnet. Es liegt im Rahmen der Erfindung, dass es sich bei dem Arbeitsfahrzeug auch um einen selbstfahrenden Mähdrescher oder Feldhäcksler sowie um ein sonstiges land-, forstwirtschaftliches oder kommunales Nutzfahrzeug mit einer Kabine handeln kann.

Eine Fahrerkabine 13 des Traktors 1 bildet mit dem Fahrerstand 9 eine Einheit, die gegenüber dem sie tragenden Getriebe- und Hinterachsgehäuse 3 über nicht näher dargestellte Elemente federnd bzw. schwingungsdämpfend gelagert ist. Daher wird von dem Fahrerstand 9 ein Kabinenboden 14 gebildet, und untere Rahmenteile 15 der Fahrerkabine 13 umschließen zum Teil den Kabinenboden 14 und sind in anderen Bereichen oberhalb der Kotflügel 7 und 8 geführt. Von den unteren Rahmenteilen 15 gehen im Frontbereich der Fahrerkabine 13 im Wesentlichen vertikal verlaufende A-Säulen 16 und 17 aus, zu denen beabstandet B-Säulen 18 und 19 und schließlich am Heck der Fahrerkabine 13 hintere Säulen 20 und 21 verlaufen.

Die Säulen 16 bis 21 sind an ihren oberen Enden über obere Rahmenteile 22 miteinander verbunden, wobei diese oberen Rahmenteile 22 umlaufend ausgebildet sind und ein als vorkonfektioniertes Modul ausgeführtes Kabinendach 23 aufnehmen. Wie weiterhin aus der Figur 1 hervorgeht, ist die Fahrerkabine 13 rundherum verglast, d. h., sie weist eine Frontscheibe 24 und von dieser durch Querrahmen abgetrennte, im Fußraum befindliche vordere Frontscheibenteile 25 auf. Weiterhin ist auf beiden Seiten der Fahrerkabine 1 jeweils eine verglaste Kabinentür 26 und 27 vorgesehen, die, wie aus der perspektivischen Darstellung hervorgeht, jeweils schwenkbar an der B-Säule 18 bzw. 19 gelagert ist und an die entsprechende A-Säule 16 bzw. 17 anschlägt. Hinter den verglasten Kabinentüren 26 und 27 befinden sich zwischen der jeweiligen B-Säule 18 bzw.19 und der entsprechenden hinteren Säule 20 bzw. 21 Seitenfenster 28 und 29. Schließlich ist die Fahrerkabine 13 auf ihrer Heckseite, also in dem zwischen den hinteren Säulen 20 und 21 liegenden Bereich durch eine Heckscheibe 30 verschlossen, die zur Verbesserung der Sicht auf im Heckbereich der Kabine 13 angebaute Arbeitsgeräte bis an den Kabinenboden 14 reichen kann.

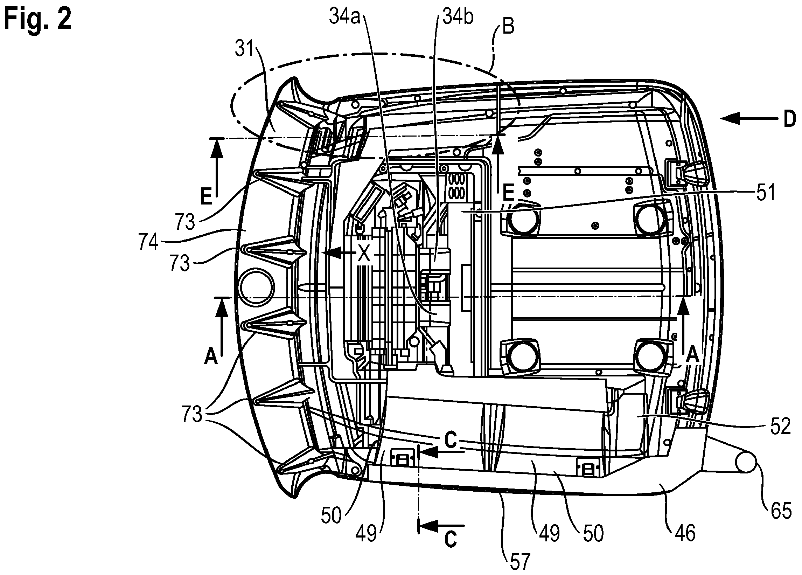

Fig. 2 zeigt das Kabinendach 23 in einer Ansicht von unten, wobei zur besseren Veranschaulichung eine das Kabinendach 23 begrenzende Oberschale 32 transparent dargestellt ist.

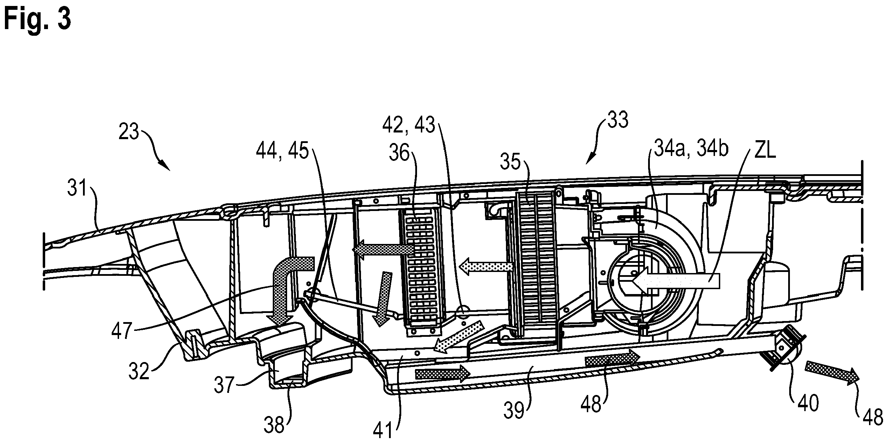

In Fig. 3 ist eine Längsschnittansicht des Kabinendaches 23 entlang der Linie A-A gemäß der Fig. 2 dargestellt. Das Kabinendach 23 umfasst zumindest zwei Schalen, eine Oberschale 31 und eine Unterschale 32. In der dargestellten Ausführungsform ist zwischen der Oberschale 31 und der Unterschale 32 eine Luftbehandlungsvorrichtung 33 angeordnet. Eine hiervon abweichende Anordnung einer Luftbehandlungsvorrichtung ist denkbar, beispielsweise im Bereich außerhalb des Kabinendaches 23. Die Luftbehandlungsvorrichtung 33 weist zumindest ein Gebläse 34a bzw. 34b, eine Kühlvorrichtung 35 sowie eine Heizvorrichtung 36 auf. Vorzugsweise sind zwei Gebläse 34a, 34b vorgesehen, die der Kühlvorrichtung 35 einen Zuluftstrom ZL zuführen. Fig. 3 zeigt eine Ansicht des Kabinendaches 23 von oben, wobei die Oberschale 31 transparent dargestellt ist. Der Zuluftstrom ZL wird, wie in Fig. 3 angedeutet, durch einen Ansaugkanals 46 angesaugt und den Gebläsen 34a, 34b zugeführt. Der Zuluftstrom ZL durchströmt die Kühlvorrichtung 35 und gelangt im Anschluss zu der hierzu beabstandet angeordneten Heizvorrichtung 36. Zwischen der Kühlvorrichtung 35 und der Heizvorrichtung 36 ist ein erster Bypass 42 angeordnet. Der Bypass 42 weist ein als Klappe 43 ausgeführtes Strömungsbegrenzungselement auf. In einer einfacheren Ausführung des ersten Bypasses 42 kann der abzuzweigende Volumenstrom gekühlter Zuluft durch zumindest ein Strömungsbegrenzungselement begrenzbar sein, welches als Blende oder Drossel ausgebildet ist. Der nicht durch den ersten Bypass 42 abgezweigte Volumenstrom gekühlter Zuluft durchströmt die Heizvorrichtung 36. Der Heizvorrichtung 36 ist ein zweiter Bypass 44 nachgeordnet. Der zweite Bypass 44 ist als eine Klappe 45 ausgeführt. Der aus der Heizvorrichtung 36 austretende, am zweiten Bypass 44 vorbeigeführte Volumenstrom bildet einen ersten Luftstrom 47, welcher einem ersten Luftverteilkanal 37 zugeführt wird. Der erste Luftverteilkanal 37 weist einen im Wesentlichen U-förmigen Verlauf auf. Dabei verlaufen näherungsweise parallele Teilabschnitte des ersten Luftverteilkanals 37 zumindest abschnittsweise in Längsrichtung der Kabine 13 zwischen der jeweiligen A-Säule 16 bzw. 17 und der jeweiligen B-Säule 18 bzw.19 oder der entsprechenden hinteren Säule 20 bzw. 21. Ein quer verlaufender Teilabschnitt des ersten Luftverteilkanals 37 erstreckt sich im Bereich der Frontscheibe 24 im Wesentlichen über die Breite der Kabine 13. Der erste Luftverteilkanal 37 weist erste Luftaustrittsöffnungen 38 auf. Aus den ersten Luftaustrittsöffnungen 38 tritt der im Wesentlichen entlang der Frontscheibe 24 strömende, nach unten gerichtete erste Luftstrom 47 aus.

Der hinter der Kühlvorrichtung 35 durch den ersten Bypass 42 abgezweigte Teilvolumenstrom gelangt, unter Umgehung der Heizvorrichtung 36, in eine hinter der Heizvorrichtung 35 befindliche Mischzone 41. In diese Mischzone 41 wird ein von dem zweiten Bypass 44 abgezweigter Teilvolumenstrom des von der Heizvorrichtung 36 erwärmten Zuluftstromes ZL eingeleitet. Die beiden Teilvolumenströme bilden einen zweiten Luftstrom 48 der einem zweiten Luftverteilkanal 39 zugeführt wird. Der zweite Luftverteilkanal 39 weist zweite Luftaustrittsöffnungen 40 auf, die in das Innere der Kabine 13 münden. Aus den zweiten Luftaustrittsöffnungen 40 tritt der in Richtung des Fahrersitzes 10 gerichtete zweite Luftstrom 48 aus.

Zwischen dem ersten Luftstrom 47 und dem zweiten Luftstrom 48 besteht eine Temperarturdifferenz, wobei der erste Luftstrom 47 eine höhere Temperatur aufweist, als der zweite Luftstrom 48. Dies hat den Effekt, dass der zweite Luftstrom 48 zum einen der Entfrostung zumindest der Frontscheibe 24 dienen kann sowie der Zuführung wärmer Luft im Bereich des Kabinenbodens 14 als im höher liegenden Bereich des Fahrersitzes 10. Bevorzugt liegt die Temperaturdifferenz zwischen dem zweiten Luftstrom 48 bei Austritt aus den zweiten Luftaustrittsöffnungen und dem ersten Luftstrom 47 bei Erreichen des Kabinenbodens 14 in einem Bereich, welcher im Allgemeinen durch eine Bedienperson ohne technische Hilfsmittel wahrnehmbar ist. Auf diese Weise wird eine Temperaturverteilung in der Kabine 13 erzielt, die von einer Bedienperson als besonders angenehm empfunden wird. Sowohl die Klappe 43 als auch die Klappe 45 können beispielsweise temperaturabhängig angesteuert werden, um die abgezweigten Teilvolumenströme, die zu dem zweiten Luftstrom 48 zusammengeführt werden, zu verändern.

Durch den Ansaugkanal 46 wird von den Gebläsen 34a, 34b der Zuluftstrom ZL angesaugt, welcher zumindest einem als Luftfilter 49 ausgebildeten Filterelement zugeführt wird, wie in Fig. 2 dargestellt. Der oder die Luftfilter 49 sind in Aufnahmeabschnitten 50 im Kabinendach 23 angeordnet. Die Luftfilter 49 sind als Taschenfilter ausgeführt. Anstelle der Taschenfilter sind auch Filterelemente der Kategorie 4 in die Aufnahmeabschnitte 50 einsetzbar, welche zur Anwendung kommen müssen, wenn mit dem Arbeitsfahrzeug 1 beispielsweise Spritzmittel ausgebracht werden sollen. Im Wesentlichen quer zur Frontscheibe 25 ist ein Umluftfilter 51 liegend angeordnet. Der Umluftfilter 51 filtriert aus der Kabine 13 angesaugte Luft, bevor diese erneut der Luftbehandlungsvorrichtung 33 als Umluft zugeführt wird.

Benachbart zu dem Ansaugkanal 46 ist eine Entlüftungsklappe 52 angeordnet, welche das Innere der Kabine 13 mit dem Ansaugkanal 46 strömungstechnisch verbindet. Die Entlüftungsklappe 52 ist nur einseitig betätigbar und öffnet bei einem im Inneren der Kabine 13 schlagartig auftretenden Überdruck, welcher durch das Zuschlagen der Kabinentür 26 hervorgerufen wird. Der durch die Entlüftungsklappe 52 entweichende Luftstrom gelangt durch den Ansaugkanal 46 zu den Luftfiltern 49. Die schlagartig auftretende Luftdruckdifferenz versetzt die Luftfilter 49 in Bewegung bzw. Schwingung. Auf diese Weise lässt sich ein Reinigungseffekt erzielen, indem an den Wänden der Luftfilter 49 abgelagerte Partikel durch die Bewegung abgelöst werden. Zugleich dient der Ansaugkanal 46 der Entlüftung.

Weiterhin zeigt die Darstellung in Fig. 2, dass die Oberschale 31 gegenüber der transparent dargestellten Unterschale 32 an einer Seite einen sich über die Breite des Kabinendaches 23 erstreckenden flächigen Überstand 74 aufweist. Der Überstand 74 stützt sich gegenüber der Unterschale 32 durch zumindest zwei beabstandet zueinander angeordnete Profilelemente 73 an dieser ab. Zur Verringerung des Gewichts bei gleichzeitiger Erhaltung oder Verbesserung der Stabilität sind die Profilelemente 73 im Wesentlichen tetraederförmig oder als 3D-Rippen ausgeführt.

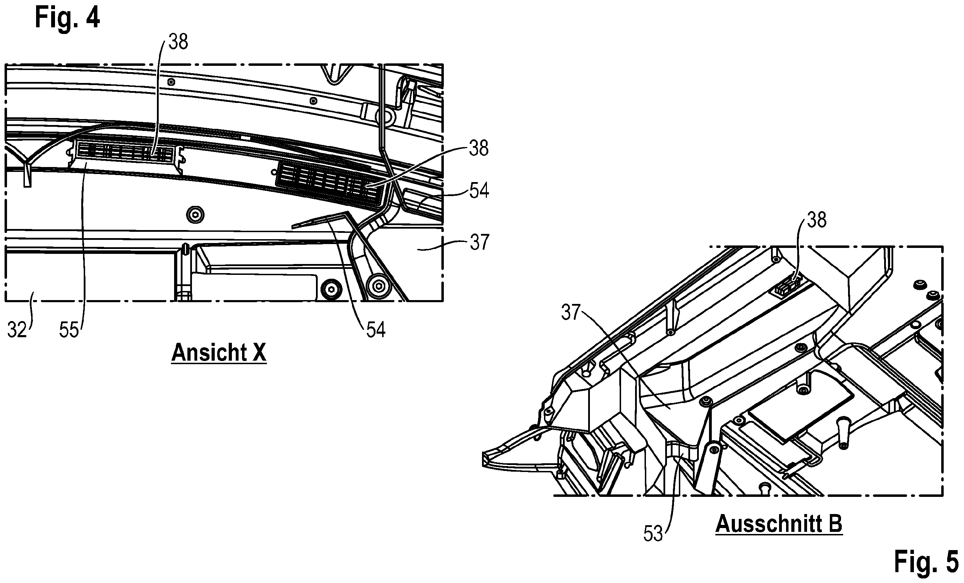

Aufgrund der nur einseitigen Ansaugung des Zuluftstromes ZL wird von dem Gebläse 34a, welches dem Ansaugkanal 46 näherliegend angeordnet ist, anteilig mehr kalte Zuluft zugeführt, als dem zu dem Ansaugkanal 46 weiter beabstandeten Gebläse 34b. Um eine homogene Aufteilung des aus den ersten Luftaustrittsöffnungen 38 ausströmenden ersten Luftstromes 47 zu erreichen, sind zumindest in dem ersten Luftverteilkanal 37 Mittel zur strömungstechnischen Beeinflussung des ersten Luftstroms 47 vorgesehen, was in den Fig. 4 und 5 dargestellt ist. Dabei zeigt die Darstellung in Fig. 4 eine Detailansicht X gemäß Fig. 2. In Fig. 5 ist ein Ausschnitt B gemäß Fig. 2 dargestellt. Bei den Mitteln handelt es sich um Rippen 53, Prallwände 54, Winkel der Prallwände 54 bzw. der Seitenwände des ersten Luftverteilkanals 37 oder sonstige das Strömungsverhalten beeinflussende Bauteile wie ein teilweise offenes Gehäuse 55, welches die erste Luftaustrittsöffnung 38 abschnittsweise umschließt. Ebenso kommt eine Variation einzelner Querschnitte des ersten Luftverteilkanal 37 zur Strömungsbeeinflussung zum Tragen.

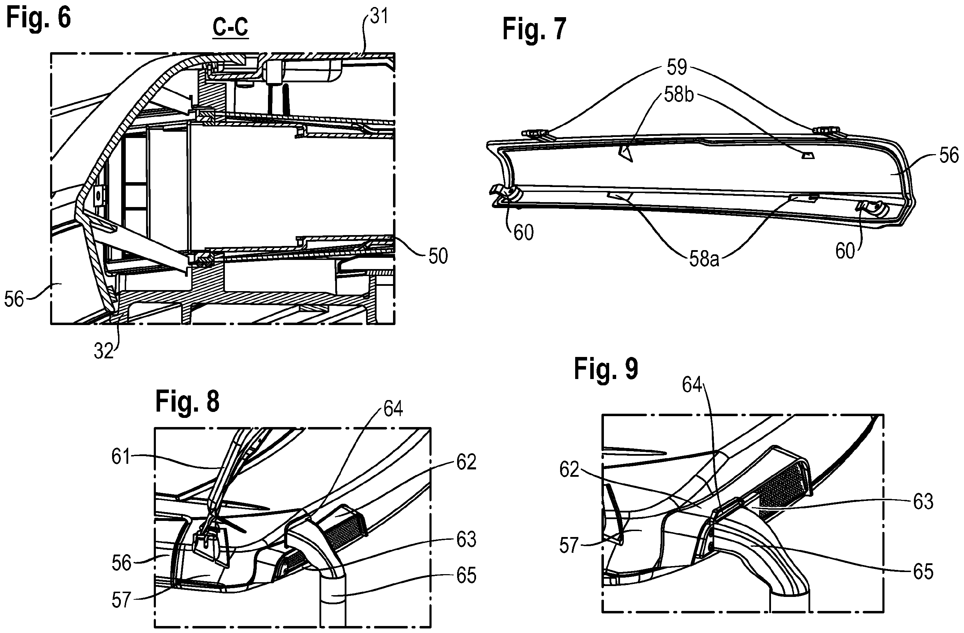

In Fig. 6 ist eine Teilschnittansicht des Kabinendaches 23 entlang der Linie C-C gemäß Fig. 2 dargestellt, welche den Aufnahmeabschnitt 50 für einen der Luftfilter 49 zeigt. Der Aufnahmeabschnitt 50 erstreckt sich im Wesentlichen waagerecht zwischen der Oberschale 31 und der Unterschale 32.

Fig. 7 zeigt ein Abdeckelement 56, welches den Aufnahmeabschnitt 50 verschließt. Das Abdeckelement 56 ist lösbar an einer zwischen der Oberschale 31 und der Unterschale 32 ausgebildeten umlaufenden Seitenwand 57 angeordnet. In montierter Position schließt das Abdeckelement 56 bündig mit der umlaufenden Seitenwand 57 ab. Das Abdeckelement 56 weist zu seiner Befestigung an der Oberschale 31 Befestigungsabschnitte 59 auf, welche ein Hochschwenken des Abdeckelementes 56 in Richtung der Oberschale 31 ermöglichen. Zur lösbaren Verbindung des Abdeckelementes 56 mit der Unterschale 32 sind Befestigungselemente 60 vorgesehen. Das Abdeckelement 56 weist auf seiner Innenseite zumindest zwei Paar Stege 58a, 58b auf, die sich abschnittsweise in Richtung des Aufnahmeabschnittes 50 erstrecken. Die Stege 58a, 58b eines Paares weisen unterschiedliche Längen auf, welches der nachgewölbten Kontur des Abdeckelementes 56 geschuldet ist. Die Länge der Stege 58a, 58b ist so bemessen, dass bei in den Aufnahmeabschnitt 50 eingebautem Luftfilter 49 sich die Stege 58a, 58b am Rahmen des Luftfilters 49 abstützen und diesen in dem Aufnahmeabschnitt 50 fixieren, wobei zugleich das Abdeckelement 56 bündig mit der umlaufenden Seitenwand 57 abschließt. Wurde das Filterelement 49 nicht korrekt in den Aufnahmeabschnitt 50 eingesetzt, führt das dazu, dass das Abdeckelement 56 nicht bündig mit der umlaufenden Seitenwand 57 abschließen kann.

In den Fig. 8 und 9 ist eine Teilansicht des Kabinendaches 23 von schräg hinten dargestellt. An der umlaufenden Seitenwand 57 ist ein Dachseitenelement 61 schwenkbar angelenkt, welches sich aus einer zur Oberschale 31 im Wesentlichen parallelen Position in eine unter einem Winkel zur Oberschale 31 geneigte Position überführen lässt. Letztere geneigte Position des Dachseitenelementes 61 ist in Fig. 8 dargestellt. An der Rückseite des Kabinendaches 23 weist die umlaufende Seitenwand 57 einen Abschnitt 62 mit Luftzufuhröffnungen 62a auf, an welchen sich der Ansaugkanal 46 anschließt. An dem Abschnitt 62 ist ein zur Oberseite des Kabinendaches 23 hin offen ausgeführtes Aufnahmeelement 63 angeordnet. In das Aufnahmeelement 63 ist ein endseitig an einem Filterschlauch 65 angeordnetes flanschförmiges Anschlusselement 64 von oben formschlüssig einführbar. Der außenseitig an der Kabine 13 angeordnete Filterschlauch 65 dient der Vorfiltration von großen Schmutzpartikeln aus der angesaugten Luft, wodurch die Standzeit der Luftfilter 49 verlängert wird. Hierzu ist die formschlüssige Verbindung zwischen dem Aufnahmeelement 63 und dem Anschlusselement 64 als Schwalbenschwanzverbindung ausgebildet. Die Bedienperson muss für das Anschließen bzw. das Lösen des Filterschlauches 65 lediglich das Dachseitenelement 61 hochschwenken und kann anschließend das Anschlusselement 64 in vertikaler Richtung in das Aufnahmeelement 63 einführen bzw. hinausschieben. Das heruntergeschwenkte Dachseitenelement 61 verhindert in montierter Position des Filterschlauches 65 das Hinausgleiten des Anschlusselementes 64 aus dem Aufnahmeelement 63.

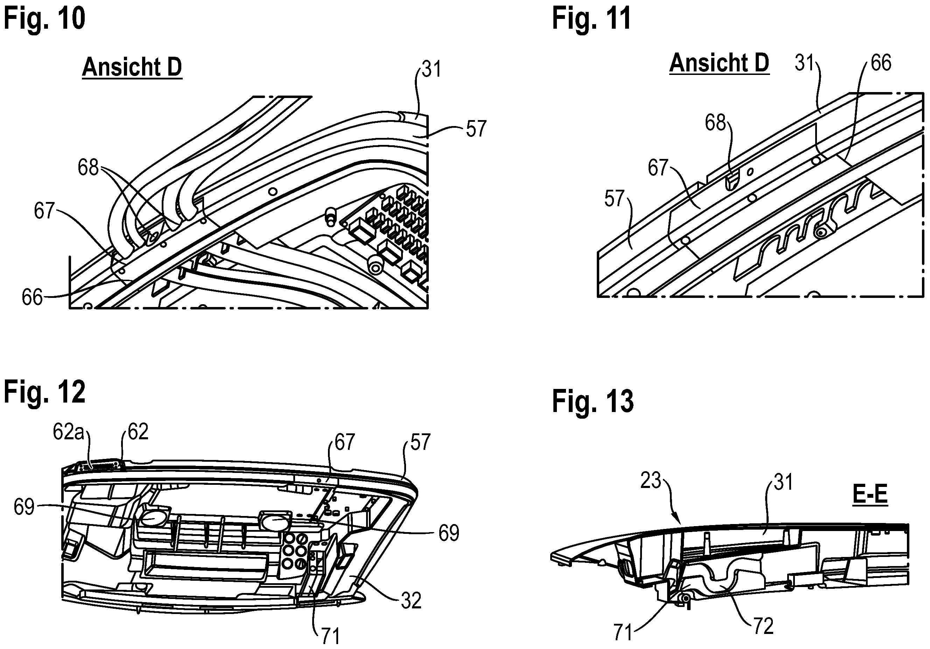

In den Fig. 10 und 11 ist eine perspektivische Teilansicht D gemäß Fig. 2 des Kabinendaches 23 von hinten dargestellt. In der umlaufenden Seitenwand 57 ist eine Aussparung 66 angeordnet. Die Aussparung 66 ist für Kabinendächer 23 bzw. Kabinen 13, die für unterschiedliche Arbeitsfahrzeuge 1, wie zum Bespiel Traktoren, selbstfahrende Mähdrescher oder Feldhäcksler, verwendet werden sollen, einheitlich dimensioniert. In die Aussparung 66 wird ein mit zumindest einer Durchtrittsöffnung 68 versehener Wandeinsatz 67 eingebracht, welcher die Aussparung 66 verschließt. In Fig. 10 ist dabei eine erste Ausführungsform des Wandeinsatzes 67 mit mehreren Durchtrittsöffnungen 68 dargestellt. In Fig. 11 ist eine zweite Ausführungsform des Wandeinsatzes 67 mit nur einer Durchtrittsöffnung 68 dargestellt. Die Anzahl und Ausgestaltung der Durchtrittsöffnungen 68 des jeweiligen Wandeinsatzes 67 hängt vom jeweiligen Typ des Arbeitsfahrzeuges 1 ab.

In Fig. 12 ist eine perspektivische Teilansicht des Kabinendaches 23 von unten dargestellt. Zwischen der Unterschale 32 und der Oberschale 31 sind mehrere hohlzylindrische Abschnitte 69 mit geschlossener Mantelfläche angeordnet. Die hohlzylindrischen Abschnitte 69 können dabei identische oder voneinander abweichende Querschnittsformen aufweisen. Eine in die Unterschale 32 mündende offen ausgeführte Grundfläche 70 des jeweiligen hohlzylindrischen Abschnittes 69 ist durch eine nicht dargestellte Lautsprechermembrane dichtend verschließbar. Die jeweils durch die Lautsprechermembrane verschlossenen hohlzylindrischen Abschnitte 69 bilden einen Resonanzkörper aus. Die Volumina der hohlzylindrischen Abschnitte 69 können jeweils durch ein Volumenbegrenzungselement veränderbar sein. Weiterhin zeigt die Darstellung in Fig. 12, dass das Innere der Kabine 13 durch einen im Kabinendach 23 angeordneten Entlüftungskanal 71 mit der Umgebung strömungstechnisch permanent verbunden ist. Der Entlüftungskanal 71 weist einen Abschnitt 72 mit einem im Wesentlichen U-förmigen Verlauf auf, was in der Teilansicht des Kabinendaches 23 im Längsschnitt entlang der Linie E-E gemäß Fig. 2 in Fig. 13 näher dargestellt ist.

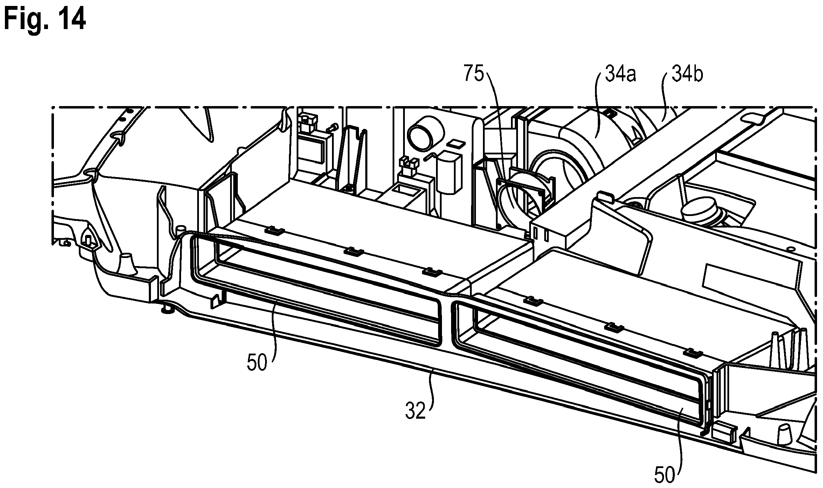

Die Darstellung in Fig. 14 zeigt eine perspektivische Teilansicht des Kabinendaches 23 von der Seite. Die Aufnahmeabschnitte 50 sind ohne eingesetzte Luftfilter 49 dargestellt. Durch den freien vorderen Aufnahmeabschnitt 50 lässt sich der Umluftfilter 51 nach außen herausziehen. Diese Anordnung hat den Vorteil, dass der Umluftfilter 51 nicht, wie im Stand der Technik üblich, nach innen in die Kabine entleert werden muss, sondern nach außen. Durch das Entnehmen des liegend angeordneten Umluftfilters 51 nach außen wird das Herausrieseln von Partikeln, die der Filter aufgenommen hat, vermieden.

Benachbart zu den Gebläsen 34a und 34b ist ein Zusatzgebläse 75 angeordnet. Das Zusatzgebläse 75 dient dazu, den bei einem Austausch der als Taschenfilter ausgeführten Luftfilter 49 durch Filterelemente, beispielsweise der Kategorie 4 oder darunterliegend, die von den Aufnahmeabschnitten 50 aufgenommen und dem Abdeckelement 56 in gleicher Weise fixiert werden, erhöhten Zuluftbedarf auszugleichen. Hierzu sind die unterschiedlichen Filterelemente als Module ausgebildet, die an die Aufnahmeabschnitte 50 angepasst sind, so dass eine einfache Auswechselbarkeit gegeben ist.

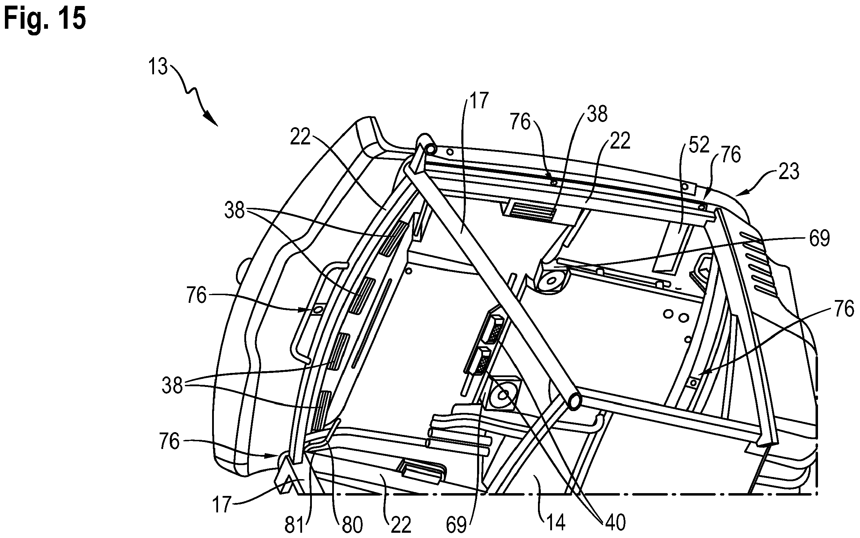

In Fig. 15 ist eine perspektivische Ansicht der Kabine 13 von schräg unten dargestellt. Das Kabinendach 23 ist als vorkonfektioniertes Modul ausgeführt, welches an der Rahmenstruktur der Kabine 13 anbringbar ist. Hierzu weisen die oberen umlaufend ausgebildeten Rahmenteile 22 mehrere Befestigungspunkte 76 auf, auf denen das vormontierte Kabinendach 23 aufsetzbar ist. Vormontiert bzw. vorkonfektioniert bedeutet, dass alle für den Betrieb der Luftbehandlungsvorrichtung 33 notwendigen Komponenten in einem vorgelagerten Fertigungsschritt zwischen der Oberschale 32 und der Unterschale 33 angeordnet worden sind. Die Unterschale 33 wird durch einen daran angeordneten Dachhimmel verkleidet.

Wie insbesondere aus der Fig. 15 zu entnehmen ist, sind die ersten Luftaustrittsöffnungen 38 und die zweiten Luftaustrittsöffnungen 40 ausschließlich im Kabinendach 23 verbaut. Dabei sind im Bereich der Frontscheibe 24 mehrere erste Luftaustrittsöffnungen 38 nebeneinander angeordnet. Diese geben den von oben nach unten gerichteten ersten Luftstrom 47 ab, der im Wesentlichen entlang der Fronscheibe 24 zum Kabinenboden 14 strömt, das heißt in den Fußbereich der Bedienperson strömt. Die oberhalb des Fahrersitzes 10 angeordneten zweiten Luftaustrittsöffnungen 40 geben den auf den Kopfbereich der Bedienperson gerichteten zweiten Luftstrom 48 ab. Wie bereits weiter oben ausgeführt, besteht zwischen dem wärmeren ersten Luftstrom 47 und dem kühleren zweiten Luftstrom 48 eine von der Bedienperson ohne Hilfsmittel wahrnehmbare Temperaturdifferenz, um eine für das Empfinden der Bedienperson angenehme Temperaturverteilung bzw. Temperaturschichtung zu erhalten.

Zur Beeinflussung der Temperaturverteilung lässt sich die Beimischung von durch die Kühlvorrichtung 35 gekühlter Zuluft mittels der Klappe 43 steuern. Die Klappe 43 kann durch einen Stellmotor verstellt werden, der wiederum durch einen zusätzlichen Temperatursensor ansteuerbar sein kann.

In der Unterschale oder der Oberschale des Kabinendachs ist zumindest eine Führungsnut 81 angeordnet, welche der abschnittsweisen formschlüssigen Aufnahme zumindest eines Schlauchs 80 zur Abführung von Kondensat dient. Die zumindest eine Führungsnut 81 ermöglicht es, den in eine A-Säule 17 der Rahmenstruktur mündenden Schlauch insbesondere im Übergangsbereich von dem Kabinendach in die A-Säule 17 knick- und stauchungsfrei zu führen. So wird dadurch die Vormontage vereinfacht, wobei bei der Montage des vorkonfektionierten Kabinendaches 23 auf der Rahmenstruktur durch die Führungsnut 81 verhindert wird, dass der Schlauch 80 beim Verbinden mit der A-Säule 17 abgeknickt wird, was einen Abfluss des Kondensats zumindest einschränkt.

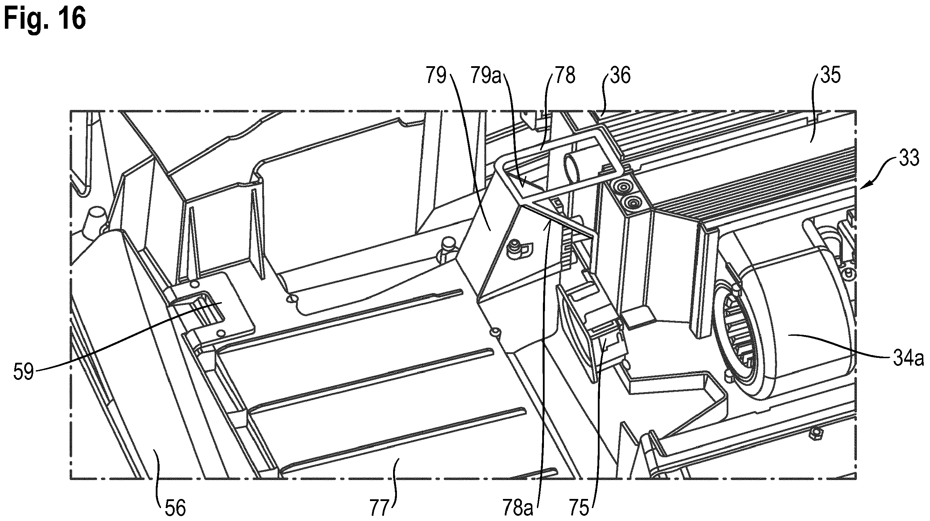

In Fig. 16 ist eine perspektivische Teilansicht auf die Unterschale 32 von oben dargestellt. Die Luftbehandlungsvorrichtung 33 weist zumindest einen Anschluss 77 auf, der mit einem korrespondierenden Gegenanschluss 78 verbunden ist. Der Gegenschluss 78 führt einen gekühlten Luftstrom einem in das Kabinendach 23 integrierten Dachkühlfach 76 zu. Der Anschluss 77 als auch der Gegenanschluss 78 weisen jeweils geneigte Anlageflächen 77a, 78a auf. Die Anlageflächen 77a und 78a sind zueinander komplementär ausgebildet, so dass das Einsetzen der Luftbehandlungsvorrichtung 33 zugleich zu einer dichtenden Verbindung des zumindest einen Anschlusses 77 mit dem Gegenanschluss 78 führt. Die Luftbehandlungsvorrichtung 33 kann im Bereich des ersten Luftverteilkanals 37 ebenfalls mit geneigten Anlageflächen ausgeführt sein, so dass auch hier eine Abdichtung bei der Montage der Luftbehandlungsvorrichtung 33 erreicht werden kann.

**Bezugszeichenliste**

| | | | |
|---|---|---|---|
| 1 | Traktor | 30 | Heckscheibe |
| 2 | Motorgehäuse | 31 | Oberschale |
| 3 | Getriebe- und Hinterachsgehäuse | 32 | Unterschale |
| 4 | Vorderachse | 33 | Luftbehandlungsvorrichtung |
| 5 | Radachse | 34a | Gebläse |
| 6 | Hinterrad | 34b | Gebläse |
| 7 | Kotflügel | 35 | Kühlvorrichtung |
| 8 | Kotflügel | 36 | Heizvorrichtung |
| 9 | Fahrerstand | 37 | Erster Luftverteilkanal |
| 10 | Fahrersitz | 38 | Erste Luftaustrittsöffnung |
| 11 | Lenkeinrichtung | 39 | Zweiter Luftverteilkanal |
| 12 | Bedieneinheit | 40 | Zweite Luftaustrittsöffnung |
| 13 | Fahrerkabine | 41 | Mischzone |
| 14 | Kabinenboden | 42 | Erster Bypass |
| 15 | Rahmenteil | 43 | Klappe |
| 16 | A-Säule | 44 | Zweiter Bypass |
| 17 | A-Säule | 45 | Klappe |
| 18 | B-Säule | 46 | Ansaugkanal |
| 19 | B-Säule | 47 | Erster Luftstrom |
| 20 | Hintere Säule | 48 | Zweiter Luftstrom |
| 21 | Hintere Säule | 49 | Luftfilter |
| 22 | Rahmenteil | 50 | Aufnahmeabschnitt |
| 23 | Kabinendach | 51 | Umluftfilter |
| 24 | Frontscheibe | 52 | Entlüftungsklappe |
| 25 | Frontscheibenteil | 53 | Rippe |
| 26 | Kabinentür | 54 | Prallwand |
| 27 | Kabinentür | 55 | Gehäuse |
| 28 | Seitenfenster | 56 | Abdeckelement |
| 29 | Seitenfenster | 57 | Seitenwand |
| 58a | Steg | ZL | Zuluftstrom |
| 58b | Steg | | |
| 59 | Befestigungsabschnitt | | |
| 60 | Befestigungselement | | |
| 61 | Dachseitenelement | | |
| 62 | Abschnitt | | |
| 62a | Luftzufuhröffnungen | | |
| 63 | Aufnahmeelement | | |
| 64 | Anschlusselement | | |
| 65 | Filterschlauch | | |
| 66 | Aussparung | | |
| 67 | Wandeinsatz | | |
| 68 | Durchtrittsöffnung | | |
| 69 | Hohlzylindrischer Abschnitt | | |
| 70 | Grundfläche von 69 | | |
| 71 | Entlüftungskanal | | |
| 72 | U-förmiger Abschnitt | | |
| 73 | Profilelement | | |
| 74 | Überstand | | |
| 75 | Zusatzgebläse | | |
| 76 | Befestigungspunkt | | |
| 77 | Dachkühlfach | | |
| 78 | Anschluss | | |
| 78a | Anlagefläche | | |
| 79 | Gegenanschluss | | |
| 79a | Anlagefläche | | |
| 80 | Schlauch | | |
| 81 | Führungsnut | | |

## Patentansprüche

1. Kabine (13) für ein landwirtschaftliches Arbeitsfahrzeug (1), umfassend einen Kabinenboden (14) und ein Kabinendach (23), zwischen denen, von einer Rahmenstruktur aufgenommen, eine Frontscheibe (24) und Seitenscheiben (28, 29) angeordnet sind, einen auf dem Kabinenboden (14) angeordneten Fahrersitz (10), zumindest eine Luftbehandlungsvorrichtung (33) zum Kühlen und Erwärmen eines Zuluftstromes (ZL), der mittels wenigstens eines Gebläses (34a, 34b, 76) durch einen im Bereich des Kabinendaches (23) angeordneten Ansaugkanal (46) der Kabine (13) zuführbar ist, sowie zumindest einen ersten Luftverteilkanal (37) im Bereich des Kabinendaches (23) mit wenigstens einer in den Innenraum der Kabine (13) mündenden ersten Luftaustrittsöffnung (38), **dadurch gekennzeichnet, dass** zumindest ein zweiter Luftverteilkanal (39) im Bereich des Kabinendaches (23) mit wenigstens einer in den Innenraum der Kabine (13) mündenden zweiten Luftaustrittsöffnung (40) vorgesehen ist, wobei die wenigstens eine erste Luftaustrittsöffnung (38) im Bereich der Frontscheibe (24) positioniert ist und einen ersten Luftstrom (47) im Wesentlichen entlang der Frontscheibe (24) nach unten gerichtet abgibt, und dass die wenigstens eine zweite in den Innenraum der Kabine mündende Luftaustrittsöffnung (40) einen zweiten Luftstrom (48) in Richtung des Fahrersitzes (10) gerichtet abgibt, wobei der erste Luftstrom (47) eine höhere Temperatur als der zweite Luftstrom (48) aufweist.

2. Kabine (13) nach Anspruch 1, **dadurch gekennzeichnet, dass** die Luftbehandlungsvorrichtung (33) eine separate Kühlvorrichtung (35) und Heizvorrichtung (35) aufweist, wobei der Zuluftstrom (ZL) zunächst der Kühlvorrichtung (35) zugeführt wird, welche den behandelten Luftstrom zumindest anteilig an die nachgeordnete Heizvorrichtung (36) abgibt.

3. Kabine (13) nach Anspruch 2, **dadurch gekennzeichnet, dass** in den zumindest einen ersten Luftverteilkanal (37) von der Heizvorrichtung (36) behandelte Luft einleitbar ist, während von der Kühlvorrichtung (35) behandelte Luft anteilig in den zumindest einen zweiten Luftverteilkanal (39) abzweigbar ist.

4. Kabine (13) nach einem der vorangehenden Ansprüche, **dadurch gekennzeichnet, dass** in dem zumindest einen ersten Luftverteilkanal (37) ein Bypass (44) angeordnet ist, durch welchen dem zumindest einen zweiten Luftverteilkanal (39) der erste Luftstrom (47) aus dem ersten Luftverteilkanal (37) anteilig zuführbar ist.

5. Kabine (13) nach Anspruch 4, **dadurch gekennzeichnet, dass** der durch den Bypass (44) zugeführte Volumenstrom des ersten Luftstroms (47) durch zumindest ein Strömungsbegrenzungselement (45) begrenzbar ist.

6. Kabine (13) nach Anspruch 4 oder 5, **dadurch gekennzeichnet, dass** das Strömungsbegrenzungselement (45) temperatur- und/oder volumenstromabhängig einstellbar ist.

7. Kabine (13) nach einem der vorangehenden Ansprüche, **dadurch gekennzeichnet, dass** der durch den Bypass (45) zugeführte Volumenstrom des ersten Luftstroms (47) durch zumindest eine verstellbare Klappe (45) begrenzbar ist.

8. Kabine (13) nach einem der vorangehenden Anspruche, **dadurch gekennzeichnet, dass** die Heizvorrichtung (36) zur Horizontalen geneigt angeordnet ist.

9. Kabine (13) nach einem der vorangehenden Ansprüche, **dadurch gekennzeichnet, dass** der benachbart zu der Frontscheibe (24) angeordnete erste Luftverteilkanal (37) sich im Wesentlichen über die Breite der Kabine (13) erstreckt.

10. Kabine (13) nach einem der vorangehenden Ansprüche, **dadurch gekennzeichnet, dass** in dem ersten Luftverteilkanal (37) den ersten Luftstrom (47) beeinflussende Mittel (53, 54, 55) vorgesehen sind, die der Vergleichmäßigung des Volumenstromes des durch zumindest zwei erste Luftaustrittsöffnungen (38) ausströmenden ersten Luftstroms (47) dienen.

11. Kabine (13) nach Anspruch 10, **dadurch gekennzeichnet, dass** die Mittel als Rippen (53), Prallwände (54), Leitwände, Gehäuse (55) oder querschnittsveränderte Kanalabschnitte ausgeführt sind.

12. Kabine (13) nach einem der vorangehenden Ansprüche, **dadurch gekennzeichnet, dass** in dem Kabinendach (23) zumindest ein Luftfilter (49) im Ansaugkanal (46) angeordnet ist, der durch eine verschließbare Öffnung an der Außenseite der Kabine (13) entnehmbar ist, so dass in entnommenen Zustand ein hinter dem Luftfilter (49) positionierter Umluftfilter (51) durch die gleiche Öffnung entnehmbar ist.

13. Kabine (13) nach einem der vorangehenden Ansprüche, **dadurch gekennzeichnet, dass** das Innere der Kabine (13) durch eine einseitig betätigbare Entlüftungsklappe (52) mit dem Ansaugkanal (46) strömungstechnisch verbindbar ist.

14. Kabine (13) nach einem der vorangehenden Ansprüche, **dadurch gekennzeichnet, dass** das Innere der Kabine (13) durch einen Entlüftungskanal (71) mit der Umgebung strömungstechnisch permanent verbunden ist, wobei der Entlüftungskanal (71) einen Abschnitt (72) mit einem im Wesentlichen U-förmigen Verlauf aufweist.

15. Landwirtschaftliches Arbeitsfahrzeug (1) mit einer Kabine (13), **dadurch gekennzeichnet, dass** die Kabine (13) nach einem der Ansprüche 1 bis 14 ausgebildet ist.
